Europäisches Patentamt

**European Patent Office**

**Office européen des brevets**

(11) Publication number: **0 179 564**
**A2**

(12) **EUROPEAN PATENT APPLICATION**

(21) Application number: **85306662.9**

(22) Date of filing: **19.09.85**

(51) Int. Cl.⁴: **B 65 G 17/46**

(30) Priority: **22.10.84 US 663178**

(43) Date of publication of application:
**30.04.86 Bulletin 86/18**

(84) Designated Contracting States:
**BE DE FR GB IT NL**

(71) Applicant: **PRECISION METAL FABRICATORS, INC.**
**6105 West 55th Avenue**
**Arvada Colorado 80002(US)**

(72) Inventor: **Lenhart, Ronald A.**
**6105 West 55th Avenue**
**Arvada Colorado, 80002(US)**

(74) Representative: **Corin, Christopher John et al,**
**Mathisen Macara & Co. The Coach House 6-8 Swakeleys**
**Road**
**Ickenham Uxbridge UB10 8BZ(GB)**

(54) Vacuum transfer conveyor apparatus.

(57) A vacuum transfer conveyor apparatus is provided for transferring containers (52) from one elevation to another having a plenum wall (W) against which a transfer belt (60) traverses, which wall (W) is provided with a plurality of parallel longitudinal slots (92,98,198,112) which extend from larger pick-up openings (94) at the upstream end of the plenum wall to the downstream end. These slots (92,98,108,112) are successively reduced in width and area from the upstream end to the downstream end. One portion of the vertical travel of the belt can be flat so as to improve the seal between the edge of the container and the transfer belt. The transfer belt (60') may be provided with a deformable foam (114) surface which provides an improved seal between the edge of each container (52 and the transfer belt (60').

Fig-1

This invention relates to a vacuum transfer conveyor apparatus for transferring selected vertically-arranged containers from a first station to a second station vertically-spaced from the first station.

More and more operations in the manufacture and packaging of goods require sensitive means of detecting and removing out-of-specification cans, containers, cartons, packages and the like. The items to be removed may not be within certain weight limits, size, position, or shape to pass a particular test. With the rapidity that the modern machines have to run to satisfy production requirements, the usual visual methods of screening are not satisfactory.

In the past, vacuum devices have been used to detect automatically and to reject downed cans. With devices of this type, a vacuum is applied to the open, upper, end of upright cans to hold the cans against a moving conveyor, while the downed cans will not be held against the vacuum mechanism and are rejected to a collection station.

One such prior art device is disclosed in US-A-4,146,467 wherein two endless belt conveyors are spaced apart longitudinally to convey cans in an upright position. The upright cans are transferred from one conveyor to the other by a vacuum transfer mechanism which is located above the adjacent ends of the conveyors. The transfer mechanism includes an endless perforate belt that travels across the open bottom of a plenum housing which is divided into a series of chambers. The chambers are subjected to a vacuum which acts to attract and hold the upright cans against the perforate belt so that the cans can be transferred by movement of the belt from one conveyor to the other, while downed cans are rejected from the conveyor system. A central chamber is subjected to a lesser vacuum than the remaining chambers, and as the cans move across this central chamber, cans with damaged upper flanges will fall from the belt to a collection site since they do not have a sufficient effective contact area to be supported by the lesser vacuum.

Another device is disclosed in US-A-4,136,767 which is directed to the use of a vacuum transfer apparatus to move cans from a feed-in can conveyor in an inverted position to an upper conveyor in upright position by means of a perforate endless can-carrying and can-uprighting conveyor belt which works over the peripheral surface of a rotary foraminous metal cylinder or drum. Vacuum is applied from a vacuum chamber or housing and a first vacuum control device to the perforate endless conveyor belt which lifts the cans off the feed-in can conveyor belt, whereupon the perforate endless conveyor belt attracts and holds the cans with the closed bottoms of the cans disposed against the performate endless conveyor belt, around approximately half of the peripheral surface or circumference of an air-permeable, rotary, foraminous, metal drum or cylinder. When the cans reach the top of the drum or cylinder, the vacuum from the vacuum chamber or housing, acting through a second and upper vacuum control device and the perforate endless conveyor belt, is cut off and the cans are delivered in upright position to a take-away or delivery conveyor by which the cans may be transported to a second work station.

Although the prior art devices and apparatus have been suitable for their intended purposes, they have certain shortcomings which heretofore have not been overcome. In every instance, the size of the openings through the plenum and the transfer belt is quite large so that the cubic metres per minute (CMM) of air moved through the belt is quite high. At the beginning of a cycle when no cans are on the belt, the openings in the belt are all open so that air is drawn through the belt at very high CMM, whereas the differential static pressure through the ambient air and the plenum is relatively low. As cans are picked up by the belt, an increasing number of holes become closed by the ends of the cans or containers over the belt. As this occurs, the CMM decreases and the air speed increases as the static pressure within the plenum increases. Since the pressure differential is relatively small at the beginning of the cycle, the CMM must be extremely high in order to attract the cans to the belt. Later when a large number of cans is on the belt, the static pressure differential is so great that sometimes cans which are tipped over will be drawn up against the belt rather than being separated from the other cans. Also, the higher air speed created by the much higher pressure differential will cause the air flowing through the space between adjacent cans to create a low pressure between the cans in accordance with Bernoulli's Principle. This can be undesirable where one of these cans is defective or improperly orientated. For example, the bottom of a conventional aluminium can has a chine or taper so that the closed bottom end has a smaller surface area than the open upper end. Thus, a vacuum transfer device can be adjusted so that only cans in the upright position will be attracted to the belt, whereas if the bottom of the can is up, the surface area is too small to be held up by the vacuum and therefore is separated at the transfer station from the other cans. On the other hand, where three cans are together, one of them being upside down, if the CMM is sufficiently large, low pressure will be created in the space between the cans in accordance with the Bernoulli Principle so that the third upside down can is carried along with the other two. Thus, effective separation of the cans with the desired orientation from those which are not, is difficult and sometimes almost impossible to obtain.

An additional disadvantage with prior art devices and apparatus is that the size of the fan must be very large in order to draw sufficient CMM through the transfer belt when the system starts up in order to attract a can to the belt. Thus, the power requirements for the transfer conveyor are excessive.

Additionally, it is often necessary to provide suitable venting devices or pressure regulator devices within the plenum so that the static pressure does not become so great as to collapse the ducting.

Thus, in the prior art devices and apparatus, the pressure within the plenum is constantly changing, depending on the number of cans on the transfer belt, creating wide variations not only in static pressure within the plenum, but also in CMM through the belt resulting in difficult regulation and control problems.

The problem to be overcome by the invention is to provide a vacuum conveyor transfer device in which the power requirements are reduced in comparison with previously proposed devices.

According to the present invention there is provided a vacuum plenum having a wall, with an inner surface and an outer surface, spaced above the first station a distance slightly greater than the height of the containers and extending to the second station, at least a section of said wall being curved, means for drawing a vacuum within said plenum, laterally spaced air openings extending through said plenum wall being sized and positioned so that said vacuum drawing means draws the maximum vacuum in the plenum of which it is capable when all of said openings are uncovered and which vacuum is just sufficient to pick up only properly orientated containers at the first station, said air openings progressively decreasing in area from the first station to the second station, a foraminous transfer belt having a reach mounted against and movable along said plenum wall from the first station to the second station to transport the containers which are picked up by the vacuum from said first station to said second station, said belt having parallel rows of openings corresponding in lateral spacing to the lateral spacing of said plenum wall openings, and means for moving said transfer belt across said outer surface of said plenum wall.

The apparatus may be used either as an elevator or lowerator.

More specifically, the apparatus may include a vacuum plenum having a curved wall in a drum-like configuration, with an inner and outer surface, the wall having a first flat section spaced above a pickup station at a distance slightly greater than the height of the containers, an adjacent first curved section across which the containers are transported from a vertical orientation to a horizontal orientation, a second flat section adjacent to and extending vertically from the first curved section, and a second curved section extending from adjacent the second flat section to the discharge station, across which the containers are transported from a horizontal orientation to a vertical orientation. Means is provided for drawing a vacuum in the plenum. Additionally, a plurality of rows of parallel slots are provided in each plenum wall section which are successively graduated from a wider width in the first flat section to a narrower width in the second curved section. A transfer belt having parallel rows of holes corresponding in spacing to the rows of slots and having a reach mounted against and movable along the plenum wall from the pick-up station to the discharge station to transport the containers which are picked up by the vacuum from the pickup station to the discharge station is also provided. Finally, means for moving the transfer belt across the plenum wall is provided.

The first flat plate includes a cut-out area at the upstream end of each of the slots which slots are substantially equal in area to the holes in the transfer belt to provide sufficient air flow between the surface of the upper end of the containers and the transfer belt and sufficient velocity to reduce pressure between these surfaces in accordance with the Bernoulli Principle and the Coanda Effect to assist in lifting the containers off the pick-up station and against the transfer belt where they are held by the vacuum in the plenum.

Additionally, the outer surface of the belt may be made of a deformable material, such as foam, to provide a substantially air-tight seal with the peripheral edge of each container as the transfer belt moves across the curved portions of the plenum wall.

The decrease in slot width in the plenum wall is desirable and possible since the effect of gravity on the containers is less as the containers move from the pick-up station to the discharge station when the device is used as an elevator. In other words, the entire force of gravity must be overcome to lift a container from the pick-up station to the first flat section of the plenum wall whereas after the container passes through the horizontal position, gravity then assists in holding the container against the transfer belt. By utilizing this condition, a highly efficient and economically operable system can be provided. Of course, when the apparatus is used as a lowerator, essentially the same slot configuration is used, except the containers are being conveyed from an upper pick-up station to a lower discharge station.

A vacuum conveyor transfer apparatus embodying the invention will now be described, by way of example, with reference to the accompanying diagrammatic drawings, in which:

Figure 1 is a perspective view of a curved vacuum transfer conveyor apparatus constructed in accordance with this invention, with certain parts broken away for clarity of illustration;

Figure 2 is a side elevation of the apparatus of Fig. 1;

Figure 3 is a front elevation of the apparatus of Figs. 1 and 2;

Figure 4 is a fragmentary developed view of a curved plenum wall of the apparatus of Figs. 1-3;

Figure 5 is a fragmentary section, to an enlarged scale, through a curved section of the wall of the plenum and of a transfer belt showing a seal operative between a container and the belt; and

Figure 6 is fragmentary section, to an enlarged scale, of one of the slots of Fig. 4.

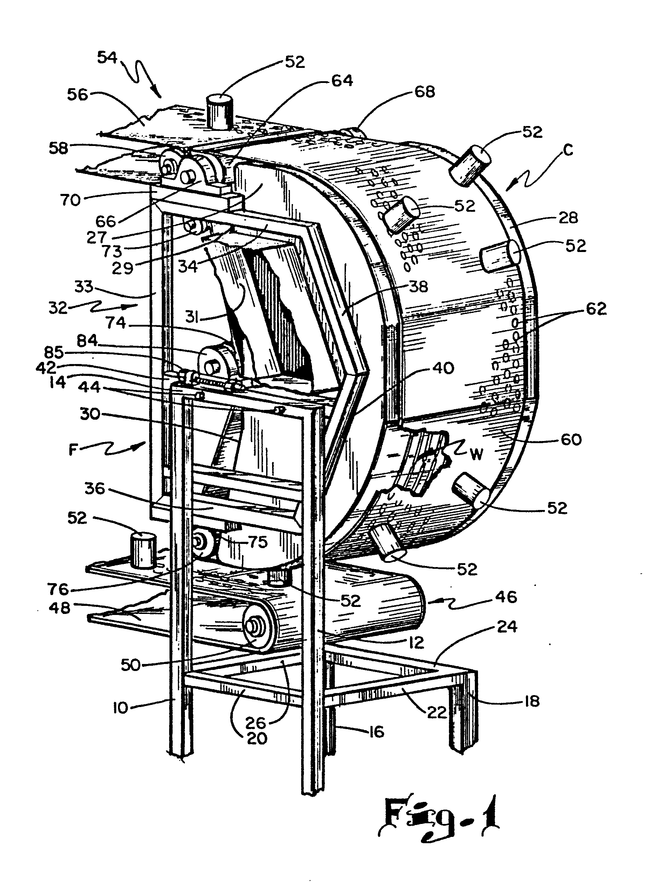

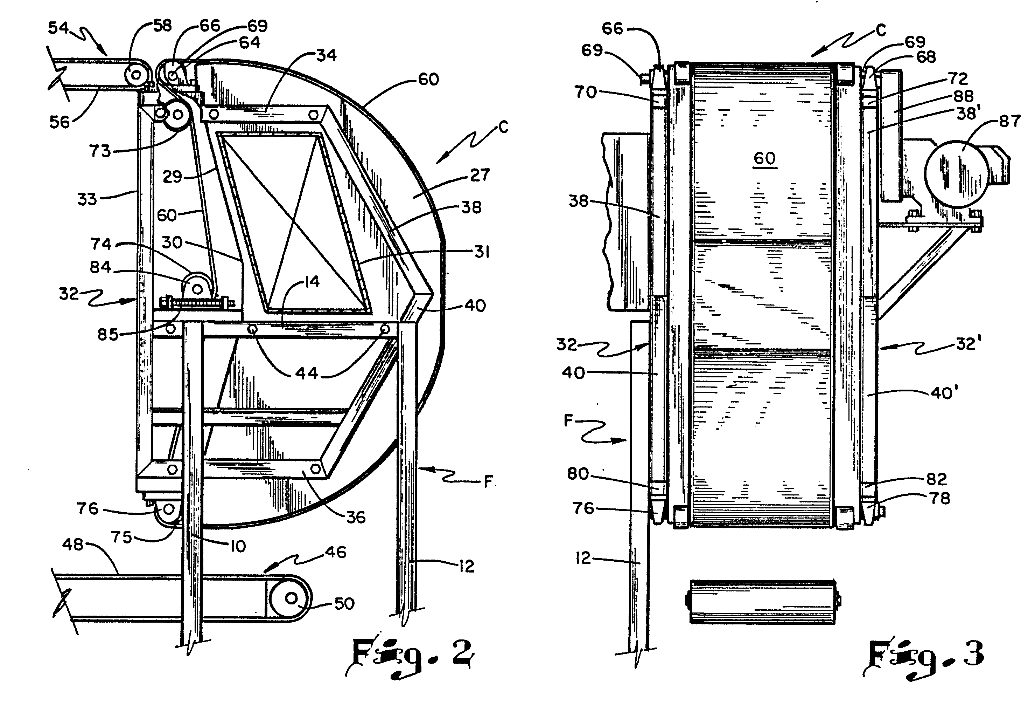

Referring now to the drawings, a curved vacuum transfer conveyor C is provided which is mounted and supported by frame F, as best seen in Figs. 1-3. The frame F includes two long vertically spaced support members 10 and 12 which are interconnected at their upper ends by a cross bar 14. A pair of short vertical supports 16 and 18, together with long vertical supports 10 and 12, form a four-legged base which is joined by lower cross bars 20,22,24 and 26, as seen in Fig. 1. Each of these structural members may be formed of square-section tubular stock, as shown, or of other suitable structural material such as angle irons or circular tubing.

The curved transfer plenum includes a pair of spaced sidewalls 27 and 28 which are interconnected along curved forward edges by a curved wall W, to be more fully described below. The plenum is completed by upper back wall 29 and lower back wall 30 which both slant forwardly toward the centre of curvature of curved wall W. A vacuum can be drawn in the plenum through inlet 31. Conveniently, sidewall 28 is connected to a conveyor support 32 which includes a vertical member 33 connected to an upper cross member 34 and a lower cross member 36. The opposite ends of these cross members connect to angled supports 38 and 40, respectively, which in turn are connected to each other. A transverse intermediate support 42 interconnects vertical support 33 and support 40 as shown. This intermediate support 42 is attached to crossbar 14 on frame F, as by bolts 44.

A first station or pick-up station 46 includes an endless conveyor belt 48 which extends around a drive roller 50 and conveys containers 52 to a second station or discharge station 54 includes an endless conveyor belt 56 which extends around an idler roller 58.

The endless belt 60 of vacuum transfer conveyor C has a reach which extends across plenum wall W to convey cans from pick-up station 46 to discharge station 54. Conveniently, belt 60 has spaced rows of elongate holes 62 which correspond in spacing to spaced rows of slots and holes in plenum wall W, discussed in detail below. Conveniently, endless belt 60 extends around a drive roller 64 which is rotatably supported in journals 66 and 68 on shaft 69. These journals are supported on blocks 70 and 72, respectively, which in turn are supported by the top members of supports 32

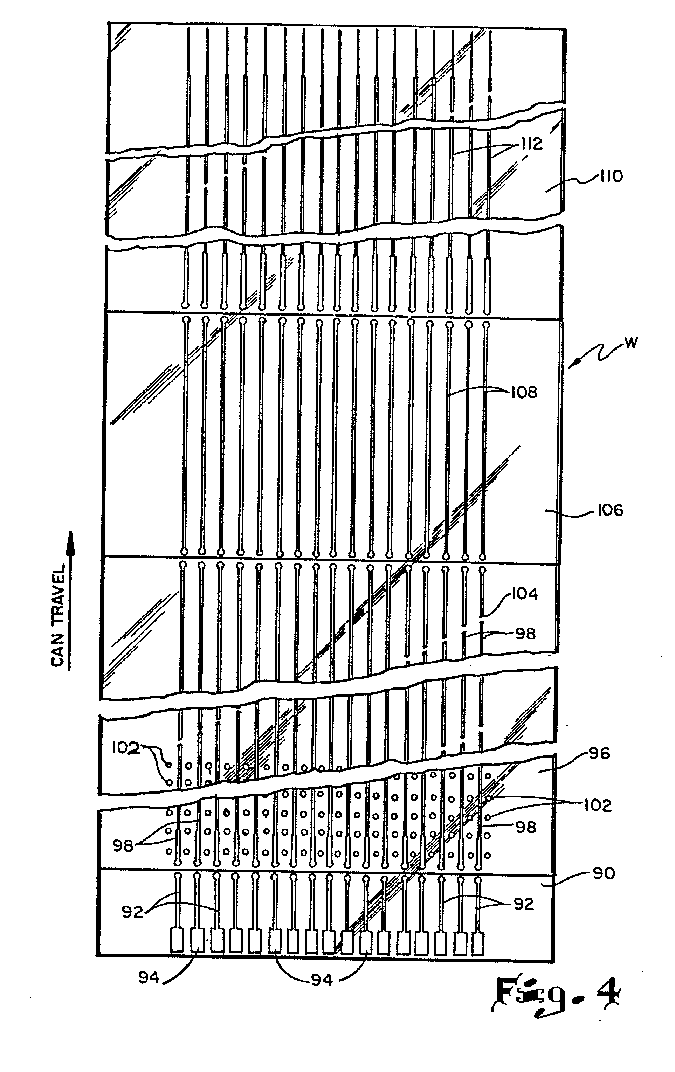

and 32'. The belt extends over idler roller 73 and past tensioning roller 74 to a lower idler roller 75 rotatably mounted in journals 76 and 78 mounted on blocks 80 and 82, as best seen in Fig. 3 which in turn are attached to the bottom cross bar of supports 32 and 32'. Conveniently, tensioning roller 74 is mounted in journals, such as journal 84 for sliding movement, as by adjustment screw 85 to adjust the tension in conveyor belt 60.

Belt 60 is driven by a motor 86, seen in Fig. 3, through a belt 88, connected to a pulley on the end of shaft 69. Conveniently, belt 60 may be driven at a higher rate of speed than belt 48 to longitudinally space containers 52 along belt 60 to facilitate the dropping of any containers which are tipped over.

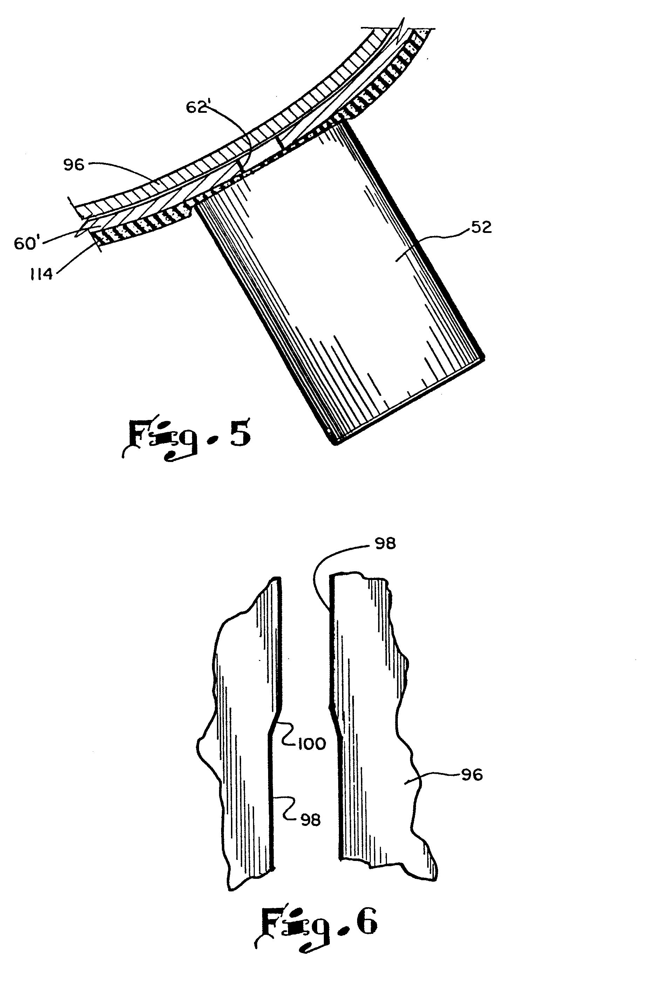

Referring to Fig. 4, plenum wall W is made up of separate sections including a first flat section 90 having relatively wide parallel, longitudinal slots 92 therein. At the upstream end of each of slots 92 is a rectangular opening 94 which is approximately the same size as slots 62 in conveyor belt 60 to allow maximum air flow through the belt into the plenum at this location. This air flow is just sufficient to lift containers 52 from conveyor belt 48 at pick-up station 46 and hold them up against transfer belt 60. The top ends of the containers are positioned in close proximity to the bottom surface of the flat section 90 such that the increased velocity of air passing over them and between the cans and the vacuum belt 60 will result in a reduction in the pressure within the spacing between the vacuum plate and the tops, following Bernoulli's Principle and the Coanda Effect, which is just sufficient to lift the containers into holding engagement with vacuum belt 60. Once the containers are lifted against belt 60 and begin to be conveyed thereby, the air flow through slots 92 is sufficient to hold the containers which are properly orientated against the belt.

Plenum wall W includes a first curved section 96 which is adjacent to and contiguous with flat section 90 and has a plurality of slots 98 whose upstream ends are of approximately the same width as the upstream ends of slots 92. These slots 98, however, have a reduced or necked down portion 100, as shown in the detail of Fig. 6, to reduce the air flow therethrough further upstream. Also, at the upstream end of curved section 96, a plurality of small holes 102 is interspaced in parallel rows between slots 98. Conveniently, the holes 62 in transfer belt 60 are spaced laterally one-half the distance of slots 92 and 98 and, therefore, the holes 102 will be aligned with the rows of holes 62 that fall between slots 98. This provides additional air flow as the containers begin to move around the curve so that they will be held against the belt and transferred even though there may be some air leakage around the top edges of the cans due to the curvature of the belt at this point. For added strength to curved plate 96, slots 98 are not continuous but have discontinuities 104 which are arranged diagonally across plate 96 so that the decrease in air flow created by the discontinuities is not present in any two adjacent belt holes 62.

Conveniently, a second flat section 106 is provided adjacent to and contiguous with curved section 96 and has slots 108 corresponding in spacing to slots 98 of curved section 96. This flat section will convey the containers upwardly with substantially no leakage since the edge of the container can be brought into peripheral engagement with the surface of belt 60 during this portion of its traverse.

Finally, a second curved section 110 is provided adjacent to and contiguous with the downstream end of the second flat section 106 and also has a plurality of parallel slots 112 which correspond in spacing to slots 108 of the second flat section 106. As with curved section 96, the slots 112 and curved section 110 can have constrictions such as that shown in Fig. 6 so that the width of slots 112 is reduced even further toward the upstream end to reduce the amount of air flow. Since gravity is assisting the holding of the cans on the belt during this portion of its traverse, the requirement for air flow continually decreases as the containers approach discharge station 54.

In Fig. 5, an alternative conveyor belt 60' is shown having holes 62' therein for holding each can 52 in place. In this embodiment, the surface of belt 60' is provided with a deformable foam layer 114 which is deformable by the edge of the container due to the vacuum drawn therein so as to improve the seal between the edge of the container and belt 60', particularly as the container is transported over the curved portions of the conveyor.

From the foregoing, the advantages of the preferred embodiment are readily apparent. Large pick-up holes are provided at the upstream end of the curved vacuum plenum wall so as to provide sufficient air flow to just pick up the containers to be transferred. Slots extend downstream from these openings and become progressively narrower so as to decrease the amount of air drawn through the belt as the need for air decreases. As the cans are first picked up, a larger amount of air is required because of the lifting force required on the cans and because of the curvature of the plenum wall. However, as the containers move upwardly, the need for this amount of air decreases. A straight vertical section in the otherwise curved plenum wall causes the container edge to be brought flat against the belt, thereby improving the seal and a mid-point, the force of gravity aids in holding the containers on the belt so that even narrower slots can be utilized. This results in a very efficient system in which the power requirements are minimized. In an alternative embodiment, a foam surface can be provided on the belt which improves the sealing of the edge of the container against the belt as it traverses the curved portions of the plenum wall. As previously discussed, when used as a lowerator, the movement of the containers is from top to bottom.

CLAIMS

1.      A vacuum transfer conveyor apparatus for transferring selected vertically-arranged containers (52) from a first station (46) to a second station (54) vertically-spaced from the first station, said apparatus being characterized by a vacuum plenum (27,28,29,30) having a wall (W), with an inner surface and an outer surface, spaced above the first station (46) a distance slightly greater than the height of the containers (52) and extending to the second station (54), at least a section of said wall (W) being curved, means (31) for drawing a vacuum within said plenum, laterally spaced air openings (92,94,98,104,108,112) extending through said plenum wall (W) being sized and positioned so that said vacuum drawing means (31) draws the maximum vacuum in the plenum of which it is capable when all of said openings are uncovered and which vacuum is just sufficient to pick up only properly orientated containers at the first station (46), said air openings progressively decreasing in area from the first station to the second station, a foraminous transfer belt (C) having a reach mounted against and movable along said plenum wall from the first station (46) to the second station (54) to transport the containers which are picked up by the vacuum from said first station to said second station, said belt having parallel rows of openings (62) corresponding in lateral spacing to the lateral spacing of said plenum wall openings, and means (64) for moving said transfer belt (C) across said outer surface of said plenum wall (W).

2. Apparatus, as claimed in claim 1, characterized by a first conveyor (48) movable at a first predetermined speed to transport containers to said first station (46), and a second conveyor (56) movable at said first predetermined speed to transport containers away from said second station (54), said moving means (64) moving said transfer belt (60) at a second predetermined speed which is greater than said first predetermined speed to increase the spacing of the containers longitudinally along said transfer belt (60) so that misaligned containers (52) cannot be picked up and carried by adjacent properly orientated containers.

3. Apparatus, as claimed in claim 1 or claim 2, characterized in that the air openings of the plenum wall (W) comprise a plurality of parallel slots (92,98,104,108,112) together extending from the first station (46) to the second station (54), said slots decreasing in width from the first station to the second station and being arranged in successive rows extending transversely of the plenum wall.

4.    Apparatus, as claimed in claim 3, characterized in that each said row of slots (92,98,104,108,112) steps down in width in increments from the first station (46) to the second station (54).

5.    Apparatus, as claimed in claim 4, characterized in that said plenum wall (W) includes a first generally flat plate section (90) spaced above the first station, and a plurality of curved plate sections (96,110) extending from said flat plate section to the second station (54), said parallel slots (92,98,104,108,110) being longitudinally aligned from one plate section to the next.

6.    Apparatus, as claimed in claim 5, characterized in that said flat plate section (90) includes large openings (94) at the upstream end of each slot (92) therein to provide sufficient air flow to lift containers at the first station (46) to said transfer belt (60).

7.      Apparatus, as claimed in claim 5 or claim 6, characterized in that said curved plate section (96) adjacent to said flat plate section (90) includes a row of holes (102) between each row of slots (98), and said transfer belt (60) has corresponding rows of said holes (62) aligned with said rows of holes (102) to provide sufficient air flow to hold said containers (52) against said curved plate section (96) during transfer across said curved plate section.

8.      Apparatus, as claimed in claim 5, claim 6 or claim 7, further characterized by a second flat plate section (106) intermediate two of said curved plate sections (96,110).

9.      Apparatus, as claimed in claim 8, characterized in that the first said curved plate section (96) is located intermediate said first and second flat plate sections the slots (92) in said first flat plate section (90) being wider than the slots (108) in said second flat plate (106) and said first curved plate section (96) having slots (98) with upstream ends of the same width as said slots (92) in said first flat plate section (90) and tapered to a downstream end of the same width as said slots (108) in said second flat plate section (106).

10.    Apparatus, as claimed in claim 5, characterized it that said transfer belt (60') includes a deformable outer surface (114) for forming a substantially air-tight seal with the peripheral edge of each of the containers (52) as said transfer belt (60') moves across said curved plate sections (96,110).

11.    A vacuum transfer conveyor apparatus for transferring and reversing the orientation of selected vertically arranged containers from a pick-up station (46) to a vertically-spaced discharge station (54), said apparatus being characterized by a vacuum plenum having a curved wall (W) with an inner surface and an outer surface, said wall having a first flat section (90) spaced above the pick-up station (46) at a distance slightly greater than the height of the containers, an adjacent first curved section (96) across which the containers (52) are transported from a vertical orientation to a substantially horizontal orientation, a second flat section (106) adjacent to and extending vertically from said first curved section (96), and a second curved section (110) extending from adjacent said second flat section to the discharge station (54), across which the containers are transported from a substantially horizontal orientation to a vertical orientation, means (31) for drawing a vacuum in said plenum, a plurality of rows of parallel slots (92,98,108,112) in each of said plenum wall sections which are successively graduated from a wider width in said first flat section (90) to a narrower width in said second curved section (110), a transfer belt (60) having parallel rows of holes (62) corresponding in spacing to said rows of slots (92,98,108,112) and having a reach mounted against and movable along said plenum wall from the pick-up station (46) to the discharge station (54) to transport the containers (62) which are picked up by the vacuum from the pick-up station to the discharge station; and means (64) for moving said transfer belt (60) across said plenum wall (W).

12. Apparatus, as claimed in claim 11, characterized in that said transfer belt (60) is endless.

13. Apparatus, as claimed in claim 11 or claim 12, characterized in that said first flat plate section (90) includes cut-out areas (94) at the upstream end of each slot (92) which are substantially equal in area to said holes (62) in said transfer belt (60) to provide sufficient air flow between the surface of the upper end of each container (52) and said transfer belt (60) and at sufficient velocity to reduce pressure between these surfaces in accordance with the Bernoulli Principle and the Coanda Effect to assist in lifting each container (52) off the pick-up station (46) and against said transfer belt (60) where it is held by the vacuum in said plenum.

Fig-1

Fig-3

Fig-2

Fig. 4

Fig. 5

Fig. 6